# EUROPEAN PATENT APPLICATION

(11) **EP 3 916 620 A1**
(43) Date of publication of application: **01.12.2021**
(21) Application number: 20176502.1
(22) Date of filing: 26.05.2020
(51) Int. Cl.: G06K 9/00

(54) **MOBILE DEVICE-ASSISTED FACIAL RECOGNITION**

(71) Applicant: Aletheaid Limited, London EC2A 2EW (GB)
(72) Inventor: Whitelaw, Lindsay, London, W2 3UW (GB); Doran, Craig, London, SW1V 3PN (GB)
(74) Representative: Cupitt, Philip Leslie

(57) **Abstract**

A method of facial recognition comprises determining (604) a location of a mobile device (102). A position of the mobile device within an image (700) is estimated (608) based on the location of the mobile device. A region (706) of the image that includes both the estimated position of the mobile device and a face (705) is identified (610). Facial recognition is performed (620) within the identified region only.

## Description

The present disclosure relates to facial recognition.

Facial recognition is a technology that allows a person to be identified using their face. Facial recognition typically involves capturing an image of a face, extracting features of the face from the image, and comparing those features with features of known faces.

As facial recognition technology grows in popularity, concerns over the potential for its misuse have also grown. For example, there are concerns that facial recognition systems may capture and store images of people without their knowledge or consent. There are also concerns that facial recognition systems could be used to track the movement of people, without their knowledge or consent, in public or private spaces.

U.S. Patent No. 7,440,594 describes a face identification method that aims to protect the privacy of people other than a specific person. Images videotaped by surveillance cameras are captured in a computer, face images are detected therefrom, and the detected face images are compared with the face image of a specific person. When the detected face images do not match the face image of the specific person, a mosaic process is applied to the detected face images to protect the privacy of the people other than the specific person. Although this technique goes some way to protect privacy, it nevertheless relies upon facial recognition algorithms being performed on images of people who have not given their consent.

### Summary

The present disclosure provides methods and apparatuses for performing facial recognition on an opt-in basis.

In accordance with a first aspect, there is provided a computer-implemented method of facial recognition. The method comprises: determining a location of a mobile device; estimating a position of the mobile device within an image based on the location of the mobile device; identifying a region of the image that includes both the estimated position of the mobile device and a face; and performing facial recognition within the identified region only.

In this manner, facial recognition is performed only on a registered user of the facial recognition system. The registered user can request facial recognition by allowing the location of their mobile device to be determined by the facial recognition system, or deny permission for facial recognition by withholding the location of their mobile device. Facial recognition is not performed on any other person who is within the image. The privacy of both registered users and non-registered persons is thus preserved, by performing facial recognition only on registered users who give their permission. This can allow registered users and non-registered persons to avoid being tracked by facial recognition, for example.

A method in accordance with the present disclosure can also reduce the amount of processing that is performed by the facial recognition system, because the system does not perform a computationally intensive facial recognition process on every face within an image. Instead, the system performs facial recognition only on a single face within the identified region.

Determining the location of the mobile device may comprise receiving coordinates of the mobile device from an indoor positioning system and/or the mobile device.

Estimating the position of the mobile device within the image may comprise projecting the location of the mobile device to a point on an image sensor of a camera that captured the image, based on the location of the mobile device and a known location of the camera. In this manner, the registered user bearing the mobile device can be reliably distinguished from other persons in the image, even when the mobile device is not visible.

Identifying the region of the image may comprise: processing the image with an edge detection algorithm to identify a plurality of edges in the image; and combining the plurality of edges to form one or more continuous lines that surround the estimated position of the mobile device, wherein each continuous line defines a respective candidate region of the image. Alternatively or additionally, identifying the region of the image may comprise: processing the image with a foreground detection algorithm to identify one or more foreground regions of the image; and selecting at least one foreground region that includes the estimated position of the mobile device as a candidate region of the image. Alternatively or additionally, identifying the region of the image may further comprise performing a face detection algorithm within each candidate region to identify a candidate region that includes a single face.

The method may further comprise: obtaining an identifier of a specific registered user of a facial recognition system; using the identifier to retrieve facial data for the specific registered user; and wherein performing facial recognition comprises comparing facial data extracted from the image with the retrieved facial data. Using an identifier for a specific user can further reduce the amount of processing that is performed by the facial recognition system, by avoiding the need to search through the entire corpus of registered users when performing facial recognition. Instead, the facial recognition system need only consider the user who is associated with the identifier.

The method may further comprise: obtaining a decryption key of a specific registered user of a facial recognition system; decrypting encrypted facial data for the specific registered user using the decryption key; and wherein performing facial recognition comprises comparing facial data extracted from the image with the decrypted facial data. The facial recognition system may store the facial data only in an encrypted form, so as to prevent an unauthorised party from using the facial data. Moreover, the facial recognition system itself may not possess the decryption key, thus preventing the operators of the facial recognition system from using the facial data in an unauthorised manner. In this manner, the facial recognition system can decrypt the encrypted facial data (and subsequently perform facial recognition) only when permitted to do so by a registered user providing their decryption key to the system. Obtaining the decryption key may comprise receiving the decryption key from the mobile device.

The method may comprise receiving a password that is wirelessly communicated to the facial recognition system by the mobile device, and using the password to retrieve facial data for the specific registered user. Performing facial recognition may comprise comparing facial data extracted from the image with the retrieved facial data. Obtaining the password from the mobile device can improve the ability of the facial recognition system to perform facial recognition only on a registered user who has actively given their permission.

The method may comprise receiving an authorisation message from the mobile device, wherein facial recognition is performed only when the authorisation message has been received. The authorisation message may comprise any one or more of: information relating to the location of the mobile device; an identifier of a specific registered user of a facial recognition system; a decryption key for decrypting encrypted facial data for the specific registered user of the facial recognition system; and/or a password for retrieving facial data for the specific registered user of the facial recognition system.

The method may further comprise transmitting a beacon signal, the beacon signal being configured to cause the mobile device to transmit information relating to its location and/or the authorisation message.

Transmitting the beacon signal may comprise: setting a field of the beacon signal to a first predetermined value; transmitting the beacon signal, with the field having the first predetermined value, for a first time period; setting the field of the beacon signal to a second predetermined value; and transmitting the beacon signal with the field having the second predetermined value for a second time period. This feature may be provided independently.

A further aspect of the present disclosure provides a method of transmitting a beacon signal. The method comprises: setting a field of the beacon signal to a first predetermined value; transmitting the beacon signal, with the field having the first predetermined value, for a first time period; setting the field of the beacon signal to a second predetermined value; and transmitting the beacon signal with the field having the second predetermined value for a second time period.

The method may optionally further comprise: after the second time period, setting the field of the beacon signal to a third predetermined value; and transmitting the beacon signal with the field having the third predetermined value for a third time period. Alternatively or in addition, the method may further comprise: after the second or third time period, setting the field of the beacon signal to the first predetermined value; and transmitting the beacon signal with the field having the first predetermined value for the first time period.

The field of the beacon signal may be designated for uniquely identifying a beacon system comprising one or more beacons. The first, second and third time periods may be less than a threshold time period, the threshold time period being a time interval between: a mobile device executing an application in response to receiving the beacon signal; and the mobile device halting execution of the application after receiving the beacon signal.

A further aspect of the disclosure provides a computer-implemented method of providing information for use in facial recognition. The method is performed by a mobile device. The mobile device may send information relating to its location and/or an authorisation message. The information relating to the location of the mobile device may be sent to a facial recognition system at which facial recognition is performed and/or to an indoor position system. The authorisation message is sent to the facial recognition system. The authorisation message may include the information relating to the location of the mobile device.

A further aspect provides an apparatus configured to perform any of the methods disclosed herein. For example, the apparatus may comprise one or more processors in communication with a memory. The memory may comprise instructions which, when executed by the one or more processors, cause the apparatus to perform any of the methods disclosed herein.

A further aspect provides a computer program product comprising instructions which, when executed by a computer, cause the computer to perform any of the methods disclosed herein. Yet another aspect provides a computer-readable medium comprising instructions which, when executed by a computer, cause the computer to perform any of the methods disclosed herein.

### Brief Description of the Drawings

Embodiments will now be described, purely by way of example, with reference to the accompanying drawings, in which:
Figure 1 is a schematic diagram of a facial recognition system suitable for implementing the present disclosure;
Figure 2 is a schematic diagram of the mobile device shown in Figure 1;
Figure 3 is a schematic diagram of the terminal shown in Figure 1;
Figure 4 is a schematic diagram of the server shown in Figure 1;
Figure 5 is a flow diagram of a method of registering a user with a facial recognition system;
Figure 6 is a flow diagram of a method of facial recognition in accordance with the present disclosure;
Figure 7 illustrates an image captured by a camera of the terminal shown in Figure 3;
Figure 8 illustrates detecting a region of the image of Figure 7 that includes the estimated position of the mobile device and the face of the person bearing the mobile device;
Figure 9 is a perspective view of an environment in which the image of Figure 7 is captured; and
Figure 10 is a flow diagram of a method of transmitting a beacon signal in accordance with the present disclosure.

### Detailed Description

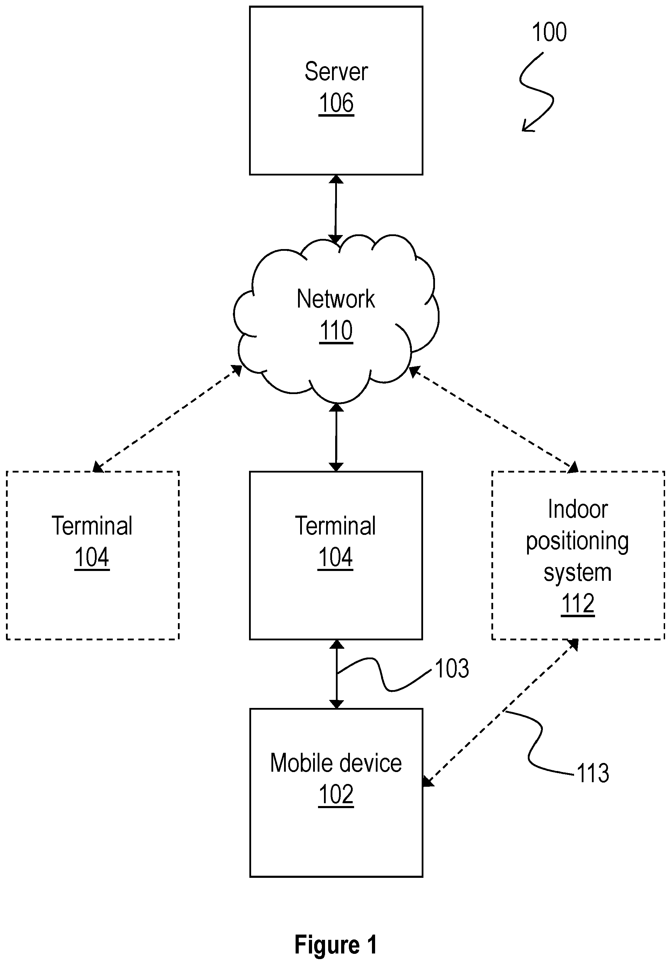

Figure 1 is a schematic diagram of an example of a facial recognition system 100 suitable for implementing methods in accordance with the present disclosure. As shown in Figure 1, the facial recognition system 100 includes one or more terminals 104 and a server 106. The terms "server" and "terminal" are intended only to facilitate identification, and should not be taken to imply any limitations or requirements on the form or capabilities of those devices. Although only one server 106 is shown in Figure 1, the disclosed functionality of the server 106 may be achieved by a plurality of servers. Such a plurality of servers may, or may not, be located at geographically distinct locations, and the disclosed functionality of the server 106 may be distributed between those servers in any suitable manner. Two terminals 104 are shown in Figure 1 for the sake of simplicity, but the facial recognition system 100 could have more or fewer terminals.

The functionality of a terminal 104 and a server 106 can combined in a single standalone device. For the sake of clarity, however, it will be assumed that the terminal 104 and server 106 are distinct entities throughout the following description. Nevertheless, the scope of the claims is intended to encompass implementations in which the functionality of both a terminal 104 and a server 106 is performed by a single entity, as well as implementations in which the terminal 104 and the server 106 are distinct entities, unless the context dictates otherwise.

The terminals 104 are configured to communicate with the server 106 via a network 110. The network 110 may include any type of wired and/or wireless data network, and may include the Internet.

The facial recognition system 100 may optionally include a mobile device 102. The mobile device 102 and terminal 104 may optionally communicate via a communication link 103. The communication link 103 is generally a short-range wireless communication link, such as a communication link that uses radio frequency, infrared, optical, ultrasonic or audible communications. Non-limiting examples of technologies that may be used to implement a radio frequency wireless communication link 103 include Bluetooth™, ZigBee™, IEEE 802.11 (Wi-Fi™) and near-field communication (NFC). The use of a short-range wireless communication link can help to ensure that both a user and the mobile device 102 are physically present at the terminal 104, and can thus reduce the risk of spoofing attacks against the facial recognition system 100. However, the communication link 103 could be implemented using a wide area network (WAN), such as a cellular telephone network.

The facial recognition system 100 may optionally include an indoor positioning system (IPS) 112. The IPS 112 may comprise one or more transmitters and/or one or more receivers that allow the location of the mobile device 102 to be determined. The IPS may be a component of the facial recognition system 100, such that some or all of its functionality is provided by the terminals 104 and/or the server 106. For example, the transmitters and/or receivers of the IPS 112 may be components of the terminals 104. As another example, the transmitters and/or receivers of the IPS 112 may be components of other mobile devices that are within communication range of the mobile device 102. Alternatively, the IPS 112 may be a discrete system that is configured to communicate with the facial recognition system 100 and/or the mobile device 102. The IPS 112 can communicate with the mobile device 102 via a wireless communication link 113. The wireless communication link 113 may be similar to communication link 103, so need not be described in detail. The IPS can also communicate with the terminals 104, for example using the network 110.

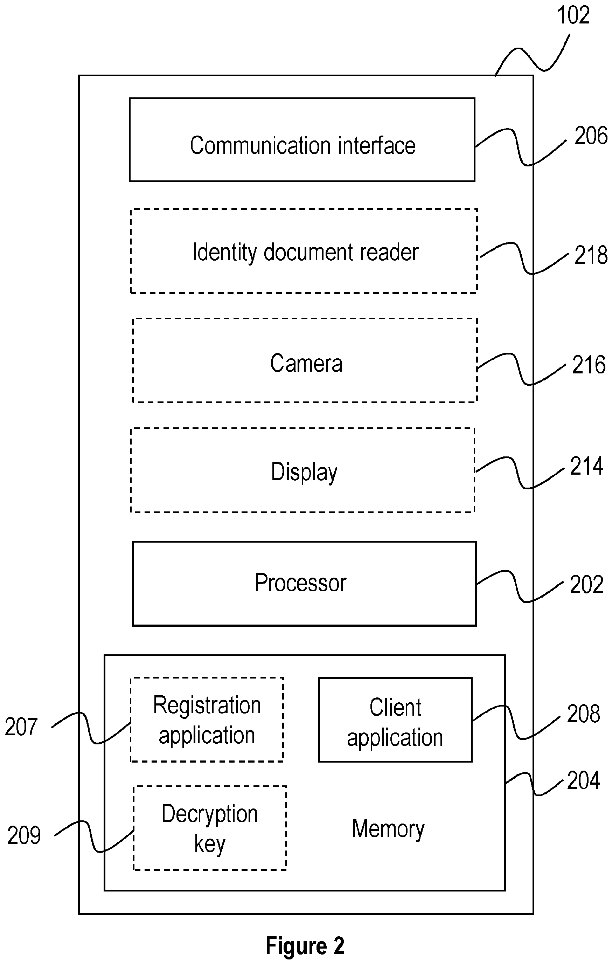

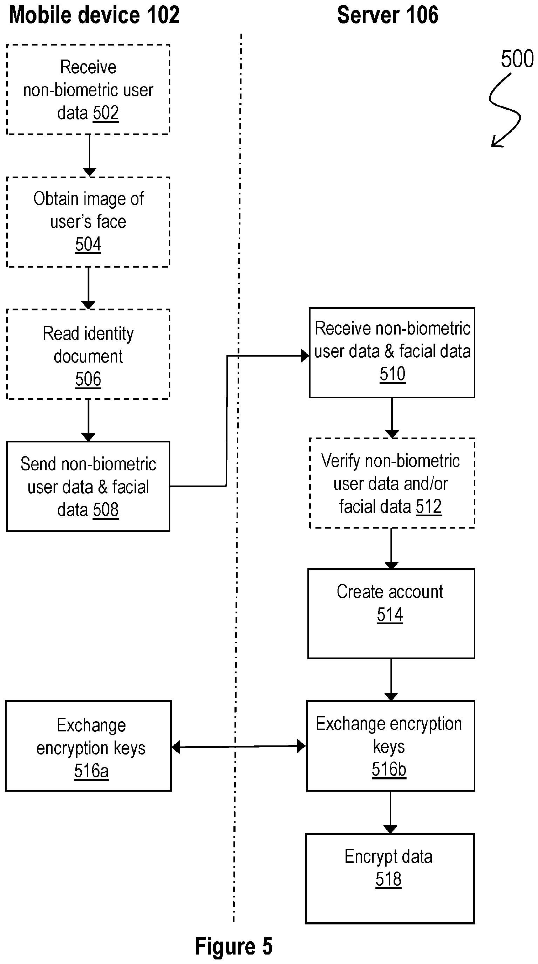

Figure 2 is a schematic diagram of a mobile device 102. The mobile device 102 may be any suitable type of computing device, such as a smartphone, tablet computer, laptop computer, or a wearable device (e.g., a smartwatch). In general, the mobile device 102 is portable, i.e., it can be carried by a user of the facial recognition system 100. The mobile device 102 comprises a processor 202, a memory 204, a communication interface 206 and, optionally, a display 214. The mobile device 102 may optionally further comprise a camera 216 and/or an identity document reader 218, to allow the communication device 102 to perform the method of registering a user with the facial recognition system that is described below with reference to Figure 5.

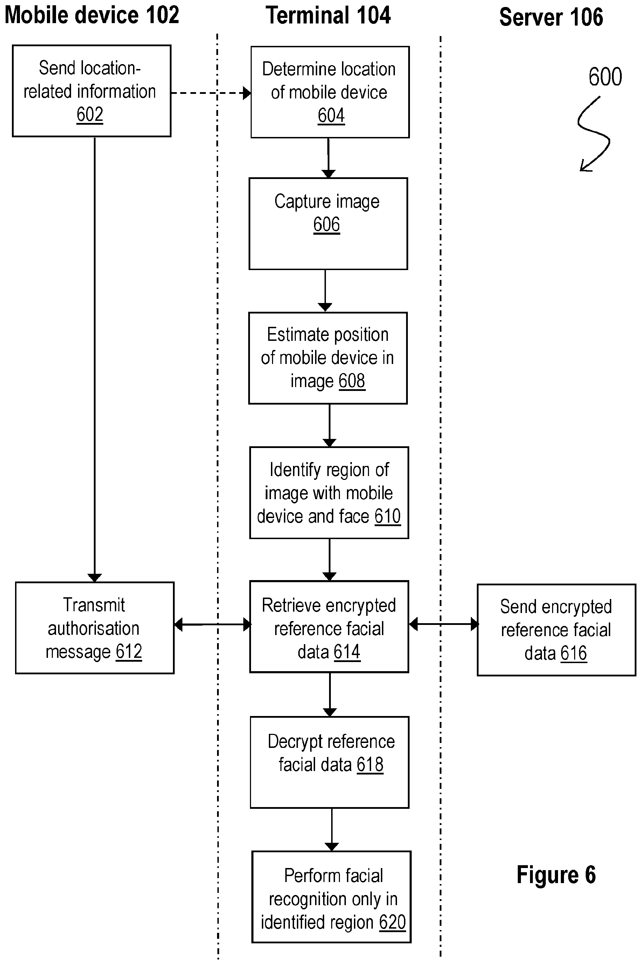

The processor 202 can be any suitable type of data processing device, such as a microprocessor, microcontroller or application specific integrated circuit (ASIC). The memory 204 can include a volatile memory, a non-volatile memory, or both volatile and non-volatile memories. The memory 204 stores a client application 208. The client application 208 includes processor-executable instructions that, when executed by the processor 202, cause the mobile device 102 to perform the method of facial recognition described below with reference to Figure 6. The memory 204 may optionally store a registration application 207 and/or a decryption key 209. The registration application 207 includes processor-executable instructions that, when executed by the processor 202, cause the mobile device 102 to perform the method of registering a user with the facial recognition system that is described with reference to Figure 5.

The communication interface 206 can include any suitable type of interface that enables the mobile device 102 to communicate with a terminal 104 via the communication link 103. The communication interface 206 may also enable the mobile device 102 to communicate with the server 106 via the network 110 to perform the method of registering a user with the facial recognition system that is described with reference to Figure 5.

The display 214 can be any suitable type of output device. For example, the display 214 may include a liquid crystal display (LCD) screen or an organic light-emitting diode (OLED) screen. The display 214 may be a touchscreen to enable data input.

The camera 216 may be a two-dimensional camera or a three-dimensional (depth) camera, either of which may be capable of taking a photograph in the visible and/or infrared regions of the electromagnetic spectrum. Further, the camera 216 may be capable of taking multiple photographs (e.g., a video), which can allow the liveness of a user to be verified and thereby reduce the risk of the facial recognition process being circumvented.

The identity document reader 218 includes hardware and/or software that is capable of reading an identity document. In general, the capabilities of the identity document reader 218 are determined by the way in which data is stored on the identity document that is to be read. For example, if the identity document is a biometric passport (e.g., a passport complying with International Civil Aviation Organization Doc 9303 on Machine Readable Travel Documents), the identity document reader 218 can include a radio frequency identity (RFID) reader and a camera. In this example, the identity document reader 218 can be configured to control the camera 216 to capture an image of the machine readable zone (MRZ) of the passport, and to perform optical character recognition (OCR) in order to extract data from the MRZ. The identity document reader 218 can be further configured to control the RFID reader to read a digital image of the passport holder from an RFID chip on the passport, optionally using a key derived from data extracted from the MRZ. The identity document reader 218 may be capable of reading multiple types of identity document, and can include whatever hardware and/or software is needed to read such documents. Purely by way of example, and without limitation, the identity document reader 218 may alternatively or additionally be capable of reading an identity card (e.g., a national identity card issued by the government of a country) or a driving licence.

In some implementations of the present disclosure, the mobile device 102 may be a smart card. In such implementations, the mobile device 102 does not include a display 214, camera 216, identity document reader 218 or a registration application 207. Smart card-based implementations of the mobile device 102 may otherwise function in substantially the same manner as other implementations. For example, the smart card may communicate with the terminal 104 via a radio frequency communication link (e.g., using an antenna in the smart card). The smart card may store and execute the client application 208 using a memory and processor of its integrated circuit (IC) chip, respectively.

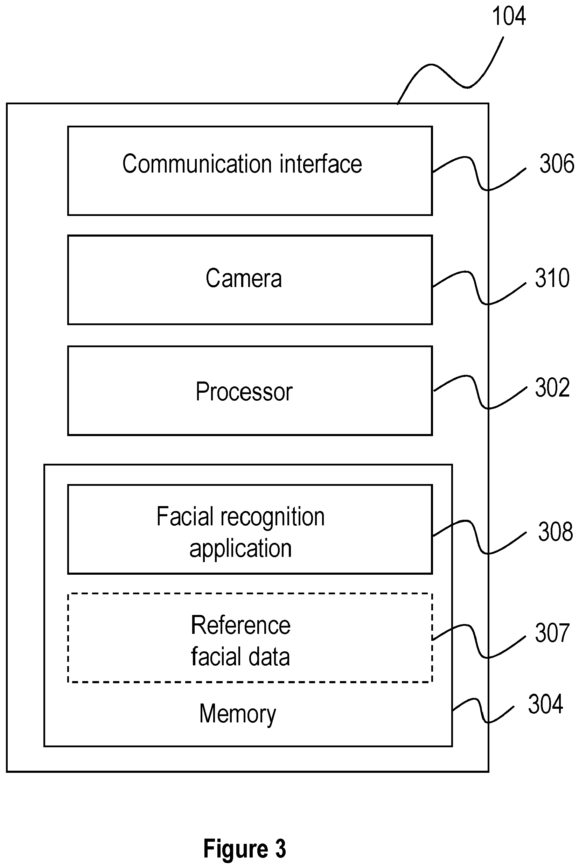

Figure 3 is a schematic diagram of the terminal 104. The terminal 104 can be any computing device that is capable of performing facial recognition. The terminal 104 comprises a processor 302, a memory 304, a communication interface 306, and one or more cameras 310.

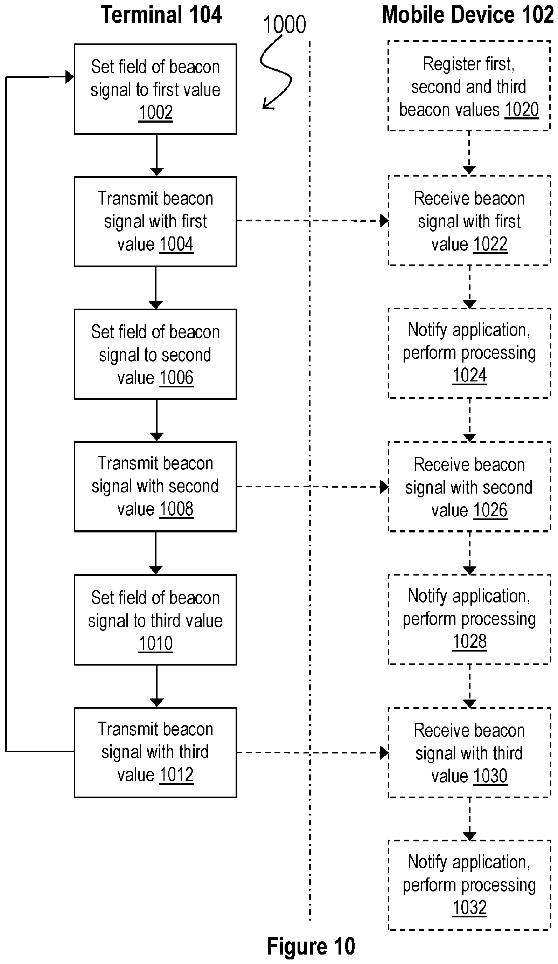

The processor 302 can be any suitable type of data processing device, such as a microprocessor, microcontroller or ASIC. The memory 304 can include a volatile memory, a non-volatile memory, or both volatile and non-volatile memories. The memory 304 stores a facial recognition application 308 and, optionally, reference facial data 307. The facial recognition application 308 includes processor-executable instructions that, when executed by the processor 302, cause the terminal 104 to perform either or both of the methods described below with reference to Figures 6 and 10. The communication interface 306 can include any suitable type of wired and/or wireless interface that enables the terminal 104 to communicate with the mobile device 102 via the communication link 103, and to communicate with the server 106 via the network 110.

The camera 310 may be a two-dimensional camera or a three-dimensional (depth) camera, either of which may be capable of taking a photograph in the visible and/or infrared regions of the electromagnetic spectrum. Further, the camera 310 may be capable of taking multiple photographs (e.g., a video), which can allow the liveness of a user to be verified and thereby reduce the risk of the facial recognition process being circumvented. The camera 310 need not be physically integrated with the terminal 104, but may instead be physically separate from the terminal 104. In such implementations, the camera 310 can communicate with the terminal 104 via any suitable type of wired or wireless communication link. Physically separating the camera 310 from the rest of the terminal 104 allows greater freedom in the location of the camera 310. For example, the camera 310 can be installed such that its field of view provides optimal coverage of an environment in which a person wishes to use the facial recognition system 100. The terminal 104 may have multiple cameras 310, such that each camera's field of view covers a different portion of the environment.

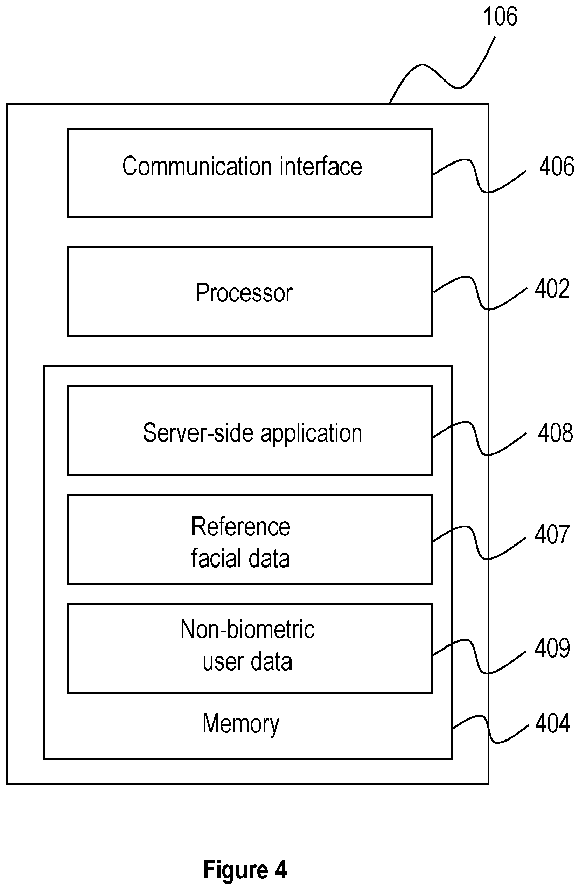

Figure 4 is a schematic diagram of the server 106. The server 106 can be any computing device that is capable of performing either or both of the methods that are described below with reference to Figures 5 and 6. The server 106 comprises a processor 402, a memory 404, and a communication interface 406.

The processor 402 can be any suitable type of data processing device, such as a microprocessor, microcontroller or ASIC. The memory 404 can include a volatile memory, a non-volatile memory, or both volatile and non-volatile memories. The memory 404 stores a server-side application 408, reference facial data 407 and non-biometric user data 409. The server-side application 408 includes processor-executable instructions that, when executed by the processor 402, cause the server 106 to perform either or both of the methods of Figures 5 and 6. The reference facial data 407 and non-biometric user data 409 may be stored in the memory 404 as a consequence of the server 106 performing the method of Figure 5. The communication interface 406 can include any suitable type of wired and/or wireless interface that enables the server 106 to communicate with the mobile device 102 and the terminal 104 via the network 110.

### Method of Registration with Facial Recognition System

Figure 5 is a flow diagram of an example method 500 of registering a user with a facial recognition system 100 in accordance with the present disclosure. The purpose of the method 500 is to acquire reference facial data for a user. As used herein, the term "facial data" may refer to: an image that includes a face, or at least a part of a face; features extracted from an image of a face; or a combination thereof. As used herein, the term "reference facial data" refers to facial data that is treated as a ground truth when performing facial recognition.

The method 500 begins at block 502, in which a mobile device 102 receives non-biometric user data. The non-biometric user data may include any one or more of the name, address, date of birth, place of birth, nationality, gender, telephone number and/or email address of the user. The user may enter (e.g., type) the non-biometric user data into the mobile device 102.

At block 504, the mobile device 102 obtains an image of the user's face. For example, the camera 216 may be used to take a photograph of the user's face. As another example, an image of the user's face may be selected from a set of one or more images stored on the mobile device 102.

At block 506, the mobile device 102 reads an identity document, such as a passport, driving licence or identity card. More specifically, the mobile device 102 uses the identity document reader 218 to read an identity document that identifies the user, so as to obtain non-biometric user data and/or facial data stored on the identity document. An advantage of obtaining non-biometric user data and/or facial data from an identity document is to improve the security and integrity of the facial recognition process. More specifically, data that has been obtained from an identity document can be assumed to be reliable because the user's identity has already been independently verified by the authority that issued the identity document. The use of an identity document can thus help to prevent a fraudster impersonating a user of the facial recognition system 100. The operations performed at block 506 depend on the manner in which data is stored on the identity document. For example, if the identity document is a biometric passport, block 506 may include capturing an image of the MRZ of the passport, performing OCR to extract data from the MRZ, deriving a key from data extracted from the MRZ, using the key to unlock the RFID chip on the passport, and receiving an image of the user's face from the RFID chip.

The method 500 may not include all of blocks 502, 504 and 506. For example, block 506 may be omitted, such that non-biometric user data is obtained solely at block 502 and facial data is obtained solely at block 504. As another example, blocks 502 and 504 may be omitted, such that the non-biometric user data and facial data is obtained solely from the identity document at block 506. As yet another example, block 504 may be omitted, such that non-biometric user data is obtained at block 502 (and, optionally, also at block 506) whilst facial data is obtained solely at block 506.

At block 508, the mobile device 102 sends the non-biometric user data and the facial data to the server 106. Then, at block 510, the server 106 receives the non-biometric user data and facial data from the mobile device 102. The non-biometric user data and facial data is sent and received via the network 110. The non-biometric user data and/or facial data can be encrypted prior to sending, so as to protect them in the event that communications between the mobile device 102 and the server 106 are intercepted.

The facial data may optionally be processed before being sent to the server. For example, an image obtained at block 504 or 506 may be processed to extract features of the user's face that allow the user to be uniquely identified (or identified with an acceptable level of certainty). For example, features such as the size, shape and position of the user's eyes, nose, mouth, jaw, cheekbones and/or ears may be extracted from the image. The facial data that is sent to the server 106 may include an image of the user's face, features extracted from the image, or a combination of both.

At block 512, the server 106 verifies the received non-biometric user data and/or facial data. The purpose of block 512 is to confirm that the received data is genuine. For example, verifying the received data may include checking that the data was obtained from a genuine identity document and/or checking that the data has not been altered. The operations performed at block 512 depend on the source of the received data, such as whether the data was obtained from identity document. For example, if the data to be verified is facial data obtained from a biometric passport, block 512 may include obtaining a public key of the authority that issued the passport, and using the public key to verify a digital signature associated with the facial data. If the received data is successfully verified at block 512, the method proceeds to block 514. Block 512 is optional.

At block 514, the server 106 creates an account for the user. The account may be a record, stored in the memory 404 of the server 106, which comprises information relating to the user. In particular, the account may include the non-biometric user data and/or the facial data that was received at block 510. Block 514 may include storing the received facial data as reference facial data 407 in the memory 404 of the server 106. Block 514 may also include storing the non-biometric user data 409 in the memory 404 of the server 106. The received facial data may optionally be processed to extract features of the user's face before being stored as reference facial data 407, as explained above. The reference facial data 407 may include an image of the user's face, features extracted from the image, or a combination of both.

As part of creating the account at block 514, the server 106 may assign an identifier to the user and, optionally, assign a password to the user. The identifier may be any sequence of characters (e.g., one or more ASCII characters, such as letters and/or numbers) that uniquely identifies the user. The password may also be a sequence of characters. The identifier may be used to identify the reference facial data 407 for a particular user, whilst the password may be used to control access to the user's reference facial data 407. The server 106 sends the identifier (and the password, if one is assigned) to the mobile device 102.

At blocks 516a and 516b, the mobile device 102 and server 106 exchange one or more encryption keys. For example, the mobile device 102 can generate a public and private key pair, and transmit the public key to the server 106. The mobile device 102 does not transmit the private key to the server 106, but instead stores the private key as decryption key 209 on the mobile device 102. Other cryptographic systems may be used.

At block 518, the server 106 encrypts the non-biometric user data 409 and/or reference facial data 407 using an encryption key that was exchanged at blocks 516a and 516b. For example, the server 106 can use the public key that was received from the mobile device 102 to encrypt the non-biometric user data 409 and/or reference facial data 407 that is stored by the server 106. The private key can be used to decrypt the reference facial data 409 during the facial recognition process that is described below with reference to Figure 6.

As noted above, the present disclosure is not limited to asymmetric (public key) cryptography, and other cryptographic systems may be used. However, whichever cryptographic system is used, it is desirable that the server 106 does not have access to a key that is needed to decrypt the stored non-biometric user data 409 and/or reference facial data 407. The risk of unauthorised use of the non-biometric user data 409 and/or reference facial data 407 is thereby reduced. Indeed, it is desirable that even the operator of the server 106 cannot use the non-biometric user data 409 and/or reference facial data 407 after it has been encrypted; instead, the non-biometric user data 409 and/or reference facial data 407 may only be decrypted using a key held by the user (such as the decryption key 209 stored on the mobile device 102).

Following the encryption of data at block 518, the method 500 ends. The user is thus registered with the facial recognition system 100. The user can subsequently be identified by facial recognition using the method 600 described below with reference to Figure 6.

### Method of Mobile Device-Assisted Facial Recognition

Figure 6 is a flow diagram of a method 600 of facial recognition in accordance with the present disclosure. The method 600 begins at block 602, in which the mobile device 102 sends information relating to its location to the facial recognition system 100. The content of the information relating to the location of the mobile device 602 can vary considerably, depending upon the capabilities of the mobile device 102 itself and upon the availability of infrastructure to assist in determining the location of the mobile device 102. Similarly, the component of the facial recognition system 100 to which the mobile device 102 sends the information may vary. For the sake of simplicity, Figure 6 shows that the mobile device 102 sends information relating to its location to the terminal 104. Alternatively, the mobile device 102 may send information relating to its location to the server 106 or the indoor positioning system (IPS) 112. Purely by way of example, a few implementations of block 602 will now be described.

In one implementation, the mobile device 102 comprises a Global Navigation Satellite System (GNSS) receiver. The GNSS receiver may comprise hardware configured to process signals received from any suitable satellite constellation (e.g., GPS, GLONASS, BeiDou and/or Galileo) in order to determine the location of the mobile device 102. In this implementation, the information relating to the location of the mobile device 102 may include coordinates (e.g., a latitude and a longitude) representing the current location of the mobile device 102. The mobile device 102 may send its coordinates directly to the terminal 104 (for example, via the communication link 103).

However, not all mobile devices 102 include a GNSS receiver. Furthermore, in some locations (e.g., when indoors), the mobile device 102 may be unable to receive GNSS signals adequately. In these cases, the IPS 112 is used to determine the location of the mobile device 102.

In one implementation using the IPS 112, the mobile device 102 is configured to receive signals transmitted by one or more transmitters of the IPS 112. The location of each transmitter of the IPS 112 is known. The mobile device 102 may process the received signals, for example to determine a time of arrival, an angle of arrival and/or a signal strength of each signal. The mobile device 102 can then determine its own location based on the known location of each transmitter and the processed signals. For example, the mobile device 102 may use triangulation and/or trilateration to determine its location based on the location of each transmitter and the time of arrival, angle of arrival and/or signal strength of a signal received from a respective transmitter. In this case, the information relating to the location of the mobile device 102 may include coordinates (e.g., a latitude and a longitude) representing the location of the mobile device 102. The mobile device 102 may send its coordinates directly to the terminal 104 (for example, via the communication link 103).

In another implementation using the IPS 112, the mobile device 102 is configured to receive signals transmitted by one or more transmitters of the IPS 112. In this implementation, the information relating to the location of the mobile device 102 may include the raw, unprocessed signals received from the one or more transmitters of the IPS 112. More specifically, block 602 may include the mobile device sending the raw, unprocessed signals to the IPS 112 (for example, via the communication link 103). The IPS 112 may process the raw signals and determine the location of the mobile device 102 using triangulation and/or trilateration based on the known location of each transmitter of the IPS 112.

In yet another implementation using the IPS 112, the mobile device 102 is configured to transmit signals to one or more receivers of the IPS 112. The location of each receiver of the IPS 112 is known. In this case, the information relating to the location of the mobile device 102 sent at block 602 comprises the signals transmitted by the mobile device 102. The receivers may process the signals received from the mobile device 102, to determine a time of arrival, an angle of arrival and/or a signal strength. The IPS 112 can then determine the location of the mobile device 102 based on the known location of each receiver and the processed signals. For example, the IPS may use triangulation and/or trilateration to determine the location of the mobile device 102 based on the location of each receiver and the time of arrival, angle of arrival and/or signal strength of a signal received from the mobile device 102.

Any suitable type of signals may be transmitted from the IPS 112 to the mobile device 102, and from the mobile device 102 to the IPS 112, to determine the location of the mobile device 102. For example, the signals may be ultra-wideband signals. As another example, the signals may be beacon signals such as Bluetooth™ low energy beacon signals. Methods of determining location using ultra-wideband signals and beacon signals are known to those skilled in the art.

In some implementations, block 602 may be initiated by the terminal 104 broadcasting a signal. For example, the signal may be a beacon signal, such as a Bluetooth™ low energy beacon. The signal is configured to alert any mobile devices within range to the presence of the terminal 104. Upon receiving the signal, the mobile device 102 may execute the client application 208, which may ask the user whether they authorise the terminal 104 to perform facial recognition. If the user grants permission to the client application 208, the mobile device 102 sends information relating to its location at block 602.

At block 604, the terminal 104 determines the location of the mobile device 102. The operations involved at block 604 depend on how the mobile device 102 sent information relating to its location at block 602. For example, if the mobile device 102 sent its coordinates to the terminal 104 at block 602, then block 604 may comprise receiving the coordinates from the mobile device 102. As another example, if the IPS 112 determined the location of the mobile device 102 based on information sent at block 602, then block 604 may comprise receiving the coordinates from the IPS 112.

Block 604 may optionally include the terminal 104 determining whether the mobile device 102 is within the field of view of its camera 310. For example, the terminal 104 may compare the coordinates of the mobile device 102 with the coordinates of an area that is known to be visible to the camera 310. As another example, the terminal 104 may determine whether the mobile device 102 is located within a predetermined distance and angular range of the camera 102. If the terminal 104 determines that the mobile device 102 is within the field of view of its camera 310, the method proceeds to block 606. Alternatively, if the terminal 104 determines that the mobile device 102 is not within the field of view of the camera 310, the method returns to block 602 or 604. In this manner, the terminal 104 avoids capturing images when the mobile device 102 is outside the field of view of the camera 310. This can reduce the power consumption of the terminal 104 and preserve the privacy of bystanders by avoiding unnecessary capturing of images.

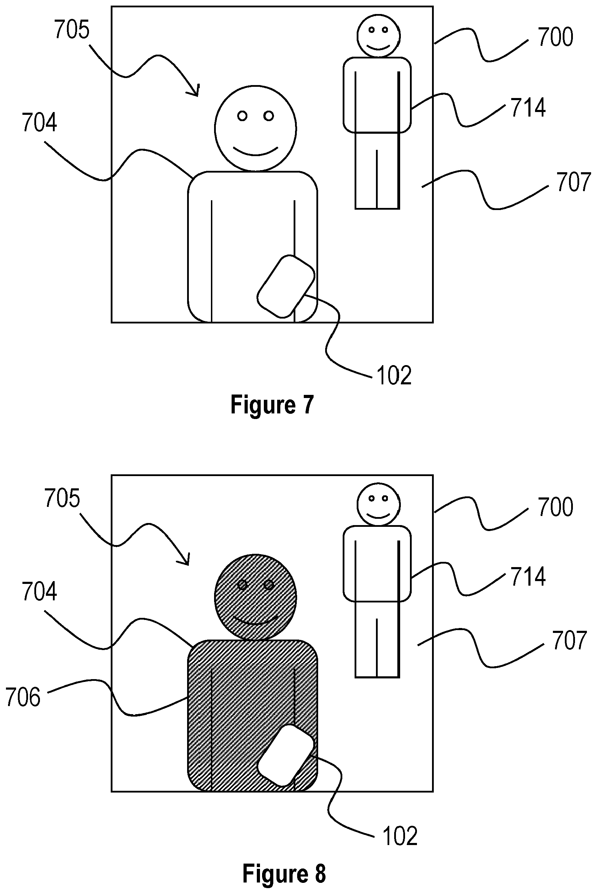

At block 606, the terminal 104 captures an image using its camera 310. Figure 7 shows a simplified example of an image 700 that may be captured at block 606. The image 700 includes a face 705 of a person 704, and a background 707. The person 704 is a registered user of the facial recognition system 100, who has authorised the terminal 104 to perform facial recognition. The mobile device 102 is shown in Figure 7, although it need not be visible in the image 700. For example, the mobile device 102 may be stowed within a pocket or bag of the person 704, or it may be covered by clothing of the person 704. The image 700 may also include a second person 714. The second person 714 is a bystander, who is within the field of view of the camera 310 but has not authorised the terminal 104 to perform facial recognition. It will be appreciated that the image 700 may not contain a second person 714, or it may contain a plurality of bystanders. The present disclosure aims to preserve the privacy of all such bystanders, by preventing facial recognition being performed on them without their authorisation.

At block 608, the terminal 104 estimates the position of the mobile device 102 in the image 700. This may include projecting the location of the mobile device 102 to a point on an image sensor of the camera 310. The projection may be based upon the location of the mobile device 102 that was determined at block 604 and a known location of the camera 310. The projection may be used to estimate the position of the mobile device 102 within the image 700.

The reader should note the distinction between the terms "location" and "position" as used herein. The term "location" is used to refer to a point in space in the real-world. For example, a location may be described by latitude and longitude coordinates that correspond to a point on Earth. In contrast, the term "position" is used to refer to a point in an image. A position may be described by the coordinates of a pixel within the image.

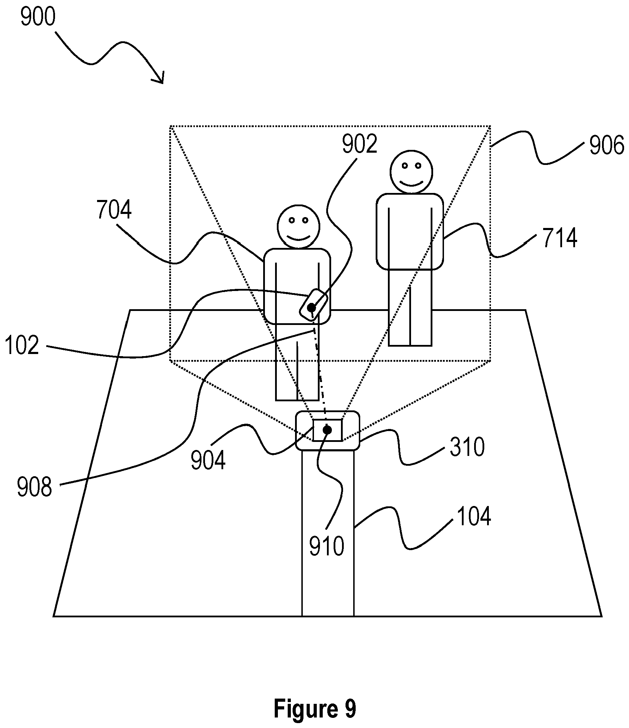

The operations performed at block 608 will now be described in more detail with reference to the example shown in Figure 9. Figure 9 illustrates a real-world environment 900 in which the image 700 shown in Figure 7 is captured. The environment 900 includes the terminal 104, the person 704 who has authorised the terminal 104 to perform facial recognition, and the second person 714. The terminal 104 includes the camera 310. The camera has an image sensor 904 and a field of view 906 (illustrated by dotted lines). The person 704 is bearing the mobile device 102, the location of which is denoted by reference sign 902. As mentioned above, the camera 102 need not be visible, although it is shown in Figure 9 for the sake of clarity.

The location 902 of the mobile device 102 is known, having been determined at block 604. The location of the camera 310 is also known. For example, the location can be measured when the camera 310 is installed. If the camera 310 is capable of moving (e.g., by panning and/or tilting), the location that was measured at the time of installation may be updated whenever the camera 310 moves. The known locations of the mobile device 102 and the camera 310 can be used to project the location 902 of the mobile device 102 to a point 910 on the image sensor 904. Line 908 illustrates the projection of the location 902 of the mobile device 102 to a point 910 on the image sensor 904. The location of point 910 on the image sensor 904 can be calculated, and thus used to estimate the position of the mobile device 102 within the image. In other words, once the location of point 910 on the image sensor 904 is known, the coordinates of a pixel within the image 700 that corresponds to the location 902 of the mobile device 102 can be calculated.

With reference to Figure 8, at block 610 the terminal 104 identifies a region 706 of the image 700 that includes both estimated position of the mobile device 102 and a face 705. The region 706 is indicated by shading in Figure 8. The aim of block 610 is to identify a contiguous group of pixels of the image 700 that include the face 705 of the person 704 who is bearing the mobile device 102, and which exclude the faces of any other people in the image 700. In this manner, facial recognition can subsequently be performed only on the person 704 who has authorised it, whilst preserving the privacy of other people 714 who are within the field of view of the camera 310. Block 610 can be performed using image processing techniques, two non-limiting examples of which are described in the following paragraphs.

A first example of an image processing technique for performing block 610 uses edge detection. Any suitable edge detection algorithm can be used. The image 700 is processed with an edge detection algorithm to identify a plurality of edges in the image. Some of the edges represent boundaries between the person 704 and the background 707. Other edges represent other features of the person 704 and the background 707.

A plurality of the detected edges are combined to form one or more continuous lines that surround the estimated position of the mobile device 102. The internal area defined by each continuous line, which encompasses the estimated position of the mobile device 102, is referred to as a "candidate region". Each candidate region is analysed to identify a candidate region that includes a single face. This can be achieved by processing each candidate region with a face detection algorithm to identify a region 706 that includes only one face 705.

The reader should take care to distinguish the terms "face detection" and "facial recognition" as used herein. Face detection is a process of identifying a region of an image that includes a face. Unlike facial recognition, face detection does not involve identifying a specific person. Accordingly, face detection does not impact upon the privacy of a person who wishes to avoid facial recognition.

A second example of an image processing technique for performing block 610 uses foreground detection. Any suitable foreground detection algorithm can be used, including algorithms that make use of depth information provided by a three-dimensional camera 310, and algorithms that identify the foreground in a two-dimensional image (or a series of two-dimensional images). The image 700 is processed with a foreground detection algorithm to label each pixel as a foreground pixel or a background pixel. The foreground detection algorithm thus identifies one or more foreground regions (i.e., groups of contiguous pixels that are labelled as foreground pixels). Each foreground region that includes the estimated position of the mobile device 102 is referred to as a "candidate region". Each candidate region is analysed to identify a candidate region that includes a single face. This can be achieved by processing each candidate region with a face detection algorithm to identify a region 706 that includes only one face 705.

A region 706 that includes both the estimated position of the mobile device 102 and a single face is very likely to include the face 705 of the person 704 who is bearing the mobile device 102. The likelihood of identifying the region 706 correctly can be improved by combining the two above-mentioned examples of image processing techniques, although it will be appreciated the each of the image processing techniques can be used independently or in combination with other techniques not described herein.

In the event that block 610 does not identify a region that includes both the estimated position of the mobile device 102 and a single face, the image 700 is discarded and method returns to block 604. More specifically, the image 700 is deleted (or otherwise prevented from being stored permanently) without facial recognition being performed. In this manner, the method 600 preserves the privacy of persons within the image 700 when a region of the image that includes only the person 704 bearing the mobile device 102 cannot be unambiguously identified.

In order to perform facial recognition, it is necessary to have reference facial data 307, 407 against which facial data extracted from an image 700 can be compared to identify a specific person 704. Blocks 612, 614, 616 and 618 obtain reference facial data 307, 407 for the person 704 who is bearing the mobile device 102. This enables one-to-one matching of facial data extracted from an image 700 against reference facial data 307, 407 for that specific person 704. One-to-one matching requires less computational effort than comparing facial data extracted from the image 700 against reference facial data 307, 407 for all registered users of the facial recognition system 100. Furthermore, blocks 612, 614, 616 and 618 also allow matching to be performed when the reference facial data 307, 407 is stored in an encrypted form. Blocks 612, 614, 616 and 618 will now be described in more detail.

At block 612, the mobile device 102 transmits an authorisation message to the terminal 104 via communication link 103. The purpose of the authorisation message is to authorise the terminal 104 to perform facial recognition on a specific registered user of the facial recognition system. The client application 208 may ask the user for permission to send the authorisation message to the terminal 104. The user may be asked for permission to send the authorisation message each time that the authorisation message is to be sent. Alternatively, the user may grant permission for the client application 208 to send the authorisation message as many times as is necessary during a particular time period (e.g., one hour). Alternatively or additionally, the user may grant permission for the client application 208 to send the authorisation message as many times as is necessary whilst the mobile device 102 is at a particular location. If the user grants permission to send the authorisation message, the mobile device 102 sends the authorisation message to the terminal 104 at block 612.

The authorisation message may include any or all of: an identifier that uniquely identifies a specific registered user of the facial recognition system 100; the decryption key 209; a password; and/or facial data of a registered user of the facial recognition system 100. The facial data may have been previously captured using the camera 216 of the user device 102, or may have been stored in the memory 204 of the mobile device 102 in some other manner.

Although block 612 is shown is being separate from block 602 in Figure 6, in some implementations the authorisation message may be sent at block 602. In these implementations, the authorisation message additionally includes the information relating to the location of the mobile device 102.

The terminal 104 receives the authorisation message from the mobile device 102 via the communication link 103. The method 600 may proceed to block 614 only when the authorisation message has been received by the terminal 104. Hence, facial recognition can be performed only when the authorisation message has been received.

At block 614, the terminal 104 retrieves encrypted reference facial data 407. For example, the terminal 104 may send a message to the server 106, wherein the message requests that the server 106 sends reference facial data 407. The message includes the identifier of the user. The message may also include a password, if one was assigned to the user at block 514.

If the authorisation message contained facial data of a registered user of the facial recognition system 100, block 614 may optionally be preceded by the terminal 104 attempting to identify the face 705 of the registered user 704 in the region 706 that was identified at block 610. In more detail, the terminal 104 detects a face 705 within the region 706, and then extracts features of the face 705 that allow the person 704 to be uniquely identified (or identified with an acceptable level of certainty). For example, features such as the size, shape and position of the user's eyes, nose, mouth, jaw, cheekbones and/or ears may be extracted from the region 706 of the image 700. The features extracted from region 706 may be compared with corresponding features of the facial data that was included in the authorisation message. The face 705 of the registered user 704 is positively identified if the extracted facial features are identical to (or within an acceptable tolerance of) the corresponding features of the facial data in the authorisation message. Such positive identification does not mean that the user has been reliably identified, however, because the facial data included in the authorisation message may not be genuine. Thus, if the face 705 of the registered user 704 is positively identified, the method proceeds to block 614 whereupon the face 705 of the registered user 704 is compared against ground truth reference facial data 307. Using facial data contained in the authorisation message in this manner can provide an additional layer of security to the method of facial recognition.

At block 616, the server 106 sends encrypted reference facial data 407 to the terminal 104. The server 106 may use the identifier from the message sent at block 614 to identify the account for a specific user. The server 106 may use the password from the message to access the encrypted reference facial data 407 from the identified user account. The server 106 then sends the reference facial data 407, in an encrypted form, to the terminal 104. The terminal 104 receives the encrypted reference facial data 407 from the server 106.

At block 618, the terminal 104 decrypts the encrypted reference facial data that was retrieved at block 614. The decryption key that was obtained at block 612 is used to decrypt the reference facial data. The decrypted reference facial data 307 may be stored in the memory 304 of the terminal 104.

At block 620, the terminal 104 performs facial recognition within only the region 706 of the image 700 that was identified at block 610. Block 620 may include detecting a face 705 within the region 706, and then extracting features of the face 705 that allow the person 704 to be uniquely identified (or identified with an acceptable level of certainty). For example, features such as the size, shape and position of the user's eyes, nose, mouth, jaw, cheekbones and/or ears may be extracted from the region 706 of the image 700. The facial features extracted from the region 706 may then be compared with corresponding features of the reference facial data 307. The person 704 is positively identified if the facial features extracted from the region 706 are identical to (or within an acceptable tolerance of) the reference facial data 307. The person 704 is deemed not to have been identified if the facial features extracted from the region 706 are different from (or outside an acceptable tolerance of) the reference facial data 307. The background 707 that surrounds the region 706 is not processed at block 620, so as to avoid performing facial recognition on bystanders 714 who have not consented to facial recognition.

When block 620 has been performed, the reference facial data 307 is permanently deleted from the memory 304 of the terminal 104. Security is thus improved by storing reference data 307 in an unencrypted form for the bare minimum time needed to perform facial recognition. Similarly, the image 700 is permanently deleted to preserve the privacy of any persons 714 within the image 700 other than the person 704. However, optionally, the region 706 containing the face 705 of a person 704 who has been positively identified may be stored for future reference; in this case, the background 707 of the image 700 is permanently discarded.

There has thus been disclosed a method 600 that allows facial recognition to be performed only on a person 704 who requests it, whilst avoiding performing facial recognition on other persons 714.

Variations of method 600 are possible within the scope of the claims. In one variant, the method 600 is performed without a server 106. In this variant, block 614 involves retrieving encrypted reference facial data 307 from the memory 304 of the terminal 104, and block 616 is not performed.

In another variant of the method 600, facial recognition is performed at the server 106. This can reduce the processing requirements of the terminal 104. In this variant, the terminal 104 extracts the region 706 from the image 700 (e.g., by cropping the image 700, 710 and/or setting the colour values of pixels outside the region 706 to a random or predetermined value), and sends only the region 706 to the server 106. This preserves privacy by preventing images of other persons 714 being sent to the server 106. The terminal 104 also sends the identifier of the user and the decryption key (and the password, if one is used) to the server 106. Blocks 618 and 620 are performed at the server 106, which sends a message to the terminal 104 to indicate whether the user was positively identified by facial recognition.

In yet another variant of the method 600, the terminal 104 and/or the server 106 may be configured to log requests for facial recognition in a distributed ledger. The distributed ledger may be, for example, a blockchain. The distributed ledger can provide an immutable record of when and/or where the user's reference facial data has been used. The distributed ledger may be inspected by the user, such that the user can see when and/or when their reference facial data was used.

### Method of Transmitting a Beacon Signal

As noted above, block 602 of the method 600 may be initiated by the terminal 104 broadcasting a beacon signal, such as a Bluetooth™ low energy beacon. If the client application 208 is not being executed as a foreground process when the beacon signal is received, the beacon signal may trigger the operating system of the mobile device 102 to execute the client application 208 as a background process. However, the operating systems of some mobile devices conserve battery power by halting background execution of the client application 208 a very short time (e.g., approximately twenty seconds) after the beacon signal is received. For such mobile devices, there may be insufficient time for the mobile device 102 to send information relating to its location before background execution of the client application 208 is halted. A further aspect of the present disclosure overcomes this difficulty by modifying the beacon signal such that the operating system does not halt background execution of the client application 208.

A beacon signal typically comprises one or more fields to allow different beacons to be distinguished from one another. For example, in the iBeacon technology developed by Apple Inc., a beacon signal has the following three fields: a *UUID*, which is a sixteen byte field that is designated for uniquely identifying a specific beacon system; a *Major* value, which is a two byte field that is designated for uniquely identifying a particular beacon within the system indicated by the UUID; and a *Minor* value, which is a two byte field that is designated for allowing further subdivision of the Major value. As used herein, the term "beacon system" refers to a set of one or more beacons.

An application installed on a mobile device 102 can be notified by the operating system whenever the mobile device enters or leaves the area of a beacon system. For example, the application can register a finite number of iBeacon UUIDs (e.g., up to twenty-five UUIDs), where each UUID is associated with a respective beacon system. Whenever the mobile device 102 receives a new beacon signal, its operating system compares the UUID of the beacon signal with the UUIDs registered by the application. If the received UUID matches one of the registered UUIDs, the operating system executes the application as a background process and notifies it that the mobile device 102 has entered the area of the beacon system. The operating system halts background execution of the application after a short time. Conversely, whenever the mobile device 102 ceases to receive a beacon signal, its operating system compares the UUID of the ceased beacon signal with the UUIDs specified by the application. If the UUID of the ceased beacon signal matches one of the UUIDs specified by the application, the operating system executes the application as a background process and notifies it that the mobile device 102 has left the area of the beacon system. The operating system again halts background execution of the application after a short time.

A method 1000 of transmitting a beacon signal in accordance with the present disclosure will now be described with reference to Figure 10. As shown in Figure 10, the method 1000 may be performed by the terminal 104 that was described above. However, the method could be performed by any other apparatus that is capable of transmitting a beacon signal, such as a dedicated beacon transmitter. Figure 10 also shows the operations that are performed by a mobile device 102 as a consequence of the method 1000 being performed by the terminal 104. However, the operations performed by the terminal 104 are essentially independent of the operations performed by the mobile device 102. Indeed, the method 1000 can be performed even when a mobile device 102 is not within communication range of the terminal 104.

The method 1000 begins at block 1002, in which the terminal 104 terminal sets a field of a beacon signal to a first predetermined value. For example, a variable of beacon-transmitting software installed on the terminal 104 may be set to the first predetermined value. As another example, a register of beacon-transmitting hardware incorporated in the terminal 104 may be set to the first predetermined value.

The particular field of the beacon signal that is set will depend on the beacon protocol. Any suitable field can be chosen, depending on the functionality and capabilities of a particular beacon protocol. Generally speaking, the field is one whose value can be registered with the operating system of the mobile device 102, such that an application is notified when the mobile device 102 receives (and/or ceases to receive) a beacon signal with a field whose value matches (e.g., is equal to) the registered value. For example, the field may be a field that is designated, by the beacon protocol, for uniquely identifying a beacon system.

For example, when the beacon signal is to be transmitted in accordance with the iBeacon protocol, the *UUID* field of the beacon signal may be set to the first predetermined value. As another example, when the beacon signal is to be transmitted in accordance with the Eddystone protocol developed by Google Inc., the *Namespace* field of the beacon signal may be set to the first predetermined value. iBeacon and Eddystone are just examples of beacon protocols, and the present disclosure can be implemented using other suitable beacon protocols.

At block 1004, the terminal 104 transmits a beacon signal. The beacon signal includes the field that is set to the first predetermined value. The beacon signal may also include any other fields that are required by the beacon protocol. Transmitting the beacon signal generally involves broadcasting the beacon signal, so that it can be received by any mobile device within communication range of the terminal 104.

The terminal 104 transmits the beacon signal for a first time period at block 1004. The first time period is less than a threshold time period. The threshold time period is the time interval between the mobile device 102 executing an application as a background process in response to receiving the beacon signal, and the mobile device 102 halting background execution of the application after receiving the beacon signal. The threshold time period can be ascertained by analysing a sample of mobile devices to determine the average time for which various applications are executed as a background process before being halted by the operating system of the mobile device 102. This can be measured in any suitable way, such as by causing an application to establish a connection to a server (e.g., server 106) when it begins executing as a background process; the connection to the server will terminate when background is halted, thus allowing the server to infer the duration of background execution from the time that the connection was active. Alternatively, the threshold time period can be determined by analysing the source code of the operating system of the mobile device 102, so as to determine how long applications are allowed to execute in the background before being halted. As another alternative, the threshold time period may be an arbitrary value (e.g., ten seconds), where the arbitrary value is determined through trial and error.

When the beacon signal has been transmitted for the first time period at block 1004, the method proceeds to block 1006. At block 1006, the terminal 104 sets the field of the beacon signal to a second predetermined value. The second predetermined value is different from the first predetermined value. The field that is set to the second predetermined value at block 1006 is the same field that was set to the first predetermined value at block 1002. Then, at block 1008, the terminal 104 transmits the beacon signal with the field set to the second predetermined value.

Because the second predetermined value is different from the first predetermined value, it appears to a mobile device 102 as if it has exited the region of one beacon system and entered the region of another beacon system. In reality, however, the mobile device 102 may not have moved at all. By creating an appearance of the mobile device 102 exiting one region and entering another region, the beacon signal prevents the operating system of the mobile device 102 from halting background execution of an application that has registered to receive notifications upon entry to (and/or exit from) beacon systems associated with the first and second predetermined values. In this manner, the time during which the application is executed as a background process before being halted by the operating system can be prolonged.

The terminal 104 transmits the beacon signal for a second time period at block 1008. The second time period is less than the threshold time period. The second time period may, or may not, be equal to the first time period. When the beacon signal has been transmitted for the second time period at block 1008, the method proceeds to block 1010.

At block 1010, the terminal 104 sets the field of the beacon signal to a third predetermined value. The third predetermined value is different from the first predetermined value and the second predetermined value. The field that is set to the third predetermined value at block 1010 is the same field that was set to the first predetermined value at block 1002. Then, at block 1012, the terminal 104 transmits the beacon signal with the field set to the third predetermined value for a third time period. The third time period is less than the threshold time period. The third time period may, or may not, be equal to the first time period and/or the second time period. The effect of blocks 1010 and 1012 is to create an appearance of the mobile device exiting the region of the beacon system associated with the second predetermined value, and entering the region of the beacon system associated with the third predetermined manner. The time during which background execution of the application occurs, before being halted by the operating system, is thus prolonged even more.

After block 1012, the method returns to block 1002. In this manner, background execution of the application can be continued indefinitely.

The first, second and third predetermined values can be any unique values that comply with the beacon protocol. However, the first, second and third predetermined values should be known by the mobile device 102. An application on the mobile device 102 can thus register to receive notifications when the mobile device 102 receives (and/or ceases to receive) a beacon signal with a field whose value matches any of the predetermined values.

In some implementations, blocks 1010 and 1012 are omitted. In these implementations, the method returns to block 1002 immediately after block 1008. Alternatively, the method 1000 may include further pairs of blocks akin to blocks 1010 and 1012, where each pair of blocks sets the field of the beacon signal to a new value and transmits the resulting beacon signal. The field of the beacon signal can be set to any number of different predetermined values, so as to prolong background execution of the application indefinitely. However, it is desirable to minimise the number of different predetermined values that are used because there is a limit to how many beacon systems can be registered by an application. The minimum number of different predetermined values that is required can be determined through trial and error. In practice, only two or three different predetermined values is sufficient to prolong background execution of the application indefinitely for the majority of mobile devices currently in use.

The operations performed by the mobile device 102 in response to the method 1000 will now be described with reference to blocks 1020 to 1032 of Figure 10. At block 1020, an application on the mobile device 102 registers the first, second and third predetermined values of the field with the operating system of the mobile device 102. Execution of the application may then terminate, or the application may continue to execute as a background process (although background execution may be halted by the operating system). The application may be the client application 208, or may be another application.

At block 1022, the mobile device 102 receives the beacon that was transmitted by the terminal 104 at block 1004. The received beacon signal contains a field whose value matches the first predetermined value, and which was registered at block 1020. Consequently, at block 1024, the operating system resumes execution of the application as a background process. Also at block 1024, the operating system notifies the application that the mobile device has entered the region of a beacon system associated with the first predetermined value. Still at block 1024, the application may perform whatever processing it is required to do upon entry into the region of a beacon system associated with the first predetermined value. For example, the application may execute block 602 and/or block 612 of the method 600 shown in Figure 6.

At block 1026, the mobile device 102 receives the beacon that was transmitted by the terminal 104 at block 1008. The received beacon signal contains a field whose value matches the second predetermined value, and which was registered at block 1020. The application is already running as a background process on the mobile device 102. Accordingly, at block 1028, the operating system notifies the application that the mobile device has exited the region of a beacon system associated with the first predetermined value and/or entered the region of a beacon system associated with the second predetermined value. Also at block 1028, the application may perform whatever processing it is required to do upon exit from the region of a beacon system associated with the first predetermined value and/or upon entry into the region of a beacon system associated with the second predetermined value. For example, the application may continue to execute block 602 and/or block 612 of the method 600 shown in Figure 6.

At block 1030, the mobile device 102 receives the beacon that was transmitted by the terminal 104 at block 1012. The received beacon signal contains a field whose value matches the third predetermined value, and which was registered at block 1020. The application is already running as a background process on the mobile device 102. Accordingly, at block 1032, the operating system notifies the application that the mobile device has exited the region of a beacon system associated with the second predetermined value and/or entered the region of a beacon system associated with the third predetermined value. Also at block 1028, the application may perform whatever processing it is required to do upon exit from the region of a beacon system associated with the second predetermined value and/or upon entry into the region of a beacon system associated with the third predetermined value. For example, the application may continue to execute block 602 and/or block 612 of the method 600 shown in Figure 6.

Different sets of first, second and third predetermined values may be established. The applications of different mobile devices may each register a respective set of predetermined values with the mobile devices' operating systems. By transmitting beacon signals with a particular set of predetermined values, the terminal 104 can cause the application to execute on a selected mobile device 102 (or a selected group of mobile devices).

The method 1000 of transmitting a beacon signal is particularly advantageous when used in combination with the method 600 of performing mobile device-assisted facial recognition. More specifically, the terminal 104 may perform the method 1000 in order to prolong background execution of the client application 208 indefinitely. This is beneficial when the face 705 of the person 704 is not clearly visible in the image captured during the first iteration of block 606. By virtue of the method 1000 disclosed herein, the mobile device 102 can repeatedly perform blocks 602 and 612 of the method 600 until facial recognition has been successfully performed on the person 704.

The method 1000 of transmitting a beacon signal that is disclosed herein can also be performed independently of the method 600. That is, the method 1000 can be performed in other situations in which there is a need for a beacon signal to cause an application to execute indefinitely as a background process. Some examples of these situations are discussed below, under the heading "Example Use Cases of Beacon Technology".

### Example Use Cases of Mobile Device-Assisted Facial Recognition

The methods of mobile device-assisted facial recognition disclosed herein can be applied in any situation where facial recognition is used. A few non-limiting examples of use cases of mobile device-assisted facial recognition will now be described.

In a first use case, mobile device-assisted facial recognition can be used to control access to a room or a building. In this use case, the camera 310 of the terminal 104 can be placed proximate to a door to the room or building. The terminal 104 may broadcast a signal that, when received by the mobile device 102, causes the mobile device 102 to send information relating to its location to the terminal 104 or the indoor positioning system 112. The terminal 104 may then determine the location of the mobile device and perform facial recognition. The user can be permitted to enter the room or building if facial recognition is successful. Advantageously, this avoids facial recognition being performed on other persons 714 who are within the field of view of the camera 310.

In a second use case, mobile device-assisted facial recognition can be used to authorise transactions. In this use case, the camera 310 of the terminal 304 can be placed at a point of sale (POS) device. The terminal 304 may be incorporated within the point of sale device. The point of sale device can prompt the user to authorise a transaction (e.g., a payment) using facial recognition, and request the location of the mobile device 102. In response, the mobile device 102 sends information relating to its location to the terminal 104 or the indoor positioning system 112, and facial recognition is performed. The transaction is authorised if facial recognition is successful. Advantageously, this avoids facial recognition being performed on other persons 714 who are within the field of view of the camera 310.

In a third use case, mobile device-assisted facial recognition can be used to control the movement of passengers in an airport. Currently, a passenger is required to show physical documents, such as a passport (or other official identity document) and a boarding pass, when taking a flight from an airport. In a typical airport, the passenger's passport is first inspected when the passenger checks-in to the flight, and a boarding pass is consequently issued to the passenger. The boarding pass is then inspected when the passenger enters the departure hall of the airport. Both the passport and the boarding pass are inspected again at the gate, before the passenger is permitted to board the flight. All of these physical document inspections take time and introduce the possibility of human error. Furthermore, the physical documents can carry pathogens (such as viruses or bacteria), such that the spread of disease can be caused by each document inspection. These problems with physical document inspections can be overcome or mitigated through the use of facial recognition in accordance with the present disclosure.

Thus, in the third use case, terminals 104 can be installed at any location in the airport at which a physical document inspection would usually occur. For example, the functionality of the terminals 104 described herein can be incorporated in any or all of a check-in desk, a self-service check-in terminal, a baggage drop desk, a security checkpoint, a passport checkpoint (e.g., an emigration or immigration checkpoint) and/or a gate.

The client application 208 may require that an official identity document (e.g., a passport) is the source of the reference facial data 307, 407. In other words, the client application may require that block 506 of the method 500 is performed with an official identity document when a passenger registers with the facial recognition system 100. The client application 208 can then take the place of the official identity document in the airport. That is, facial recognition in accordance with the method 600 can be performed whenever the physical identity document would ordinarily be inspected. Such facial recognition can be assumed to be as reliable as checking the user's identity against the physical identity document because it makes use of reference facial data taken from the identity document itself. Optionally, and for similar reasons, the client application 208 may also require that an official identity document is the source of at least some of the non-biometric user data 409 acquired at block 502 of the method 500.

Alternatively or additionally, facial recognition in accordance with the method 600 can be performed whenever a boarding pass or ticket would ordinarily be inspected. This provides greater security than physical boarding passes or tickets, which typically do not include any biometric data and can therefore be used by someone other than the person to whom the boarding pass or ticket was issued. In contrast, the use of facial recognition can ensure that only legitimate passengers can enter the departure hall or board a flight.

Thus, the third use case can improve security, reduce or eliminate the time taken to inspect physical documents, and/or avoid the spread of pathogens in an airport, whilst protecting the privacy of passengers and airport staff. It will be appreciated that the principles described above in connection with the third use case can be applied to other environments, not just airports. For example, these principles can be used to control the movement of passengers in other transport hubs (e.g., train stations, coach stations, ferry terminals, etc.) or to control the movement of persons within buildings in general.

In an optional variant of the third use case, the client application 208 can also be used to track the movement of passengers in the airport or other environment. In this variant, the client application 208 may be configured to provide real-time information on the location of the mobile device. For example, the client application 208 may include the functionality of the location tracking application that is discussed below under the heading "Example Use Cases of Beacon Technology". The client application 208 can thus allow an airline or airport operator to maintain a map of passenger locations for the entirety of their time in the airport. This, in turn, can be used to find "missing" passengers in the airport, or to provide passengers with real-time estimates of the time taken to reach the gate, and/or to provide navigation directions to the gate.

### Example Use Cases of Beacon Technology

The method of transmitting a beacon signal that is disclosed herein can be applied in any situation where there is a need for a beacon signal to cause an application to execute indefinitely as a background process. A few non-limiting examples of use cases of the beacon technology will now be described.

In a first use case, the method 1000 can be used to assist mobile device users in an emergency. Purely by way of example, the emergency may be a fire or some other situation requiring a building to be evacuated. In this use case, the terminal 104 may begin to perform the method 1000 when the emergency is detected. The beacon signal may be configured to cause execution of an emergency response application that is installed on the mobile device 102. The emergency response application may assist a user of the mobile device 102 in responding to the emergency, such as by providing directions to an exit and/or by providing real-time updates on the emergency. The method 1000 allows the emergency response application to continue executing in the background throughout the emergency.

In a second use case, the method 1000 can be used to monitor social distancing, so as to mitigate the spread of infectious diseases. In this use case, the beacon signal is configured to cause execution of a social distancing application that is installed on the mobile device 102. In addition to receiving beacon signals transmitted by a beacon system in which the location of each beacon is fixed, the social distancing application can also cause the mobile device 102 to transmit beacon signals. Furthermore, the social distancing application can receive beacon signals transmitted by social distancing applications on other mobile devices within communication range. The social distancing application may measure the received signal strength of beacon signals received from other mobile devices, and thereby estimate its distance from those other devices. If the distance between mobile devices is less than a threshold distance (e.g., one metre, two metres, five metres etc.), the mobile device 102 can generate an audible and/or visible alert. The alert may prompt the user of the mobile device 102 to maintain a safe distance from other persons. The method 1000 thereby allows the social distancing application to continue executing in the background indefinitely, and thus can assist users in complying with social distancing guidelines.

In a third use case, the method 1000 can be used to track the location of the mobile device 102. In this use case, the beacon signal is configured to cause execution of a location tracking application that is installed on the mobile device 102. The location tracking application may use the beacon signal to determine its location, and then send information relating to its location to the terminal 104. For example, the location tracking application may measure the received signal strength of beacon signals received from one or more beacons, so as to estimate its distance from each of the beacons. The location tracking application may then send the received signal strength measurements to the terminal 104, which can use trilateration to determine the location of the mobile device. The method 1000 thereby allows the location tracking application to continue executing in the background indefinitely, and thus allows the terminal 104 to monitor the location of the mobile device 102 in real-time.

The functionality of the location tracking application may be provided in the emergency response application, such that the emergency response application can also be used to track the location of the mobile device 102 in an emergency. The functionality of the location tracking application may be provided in the social distancing application, such that the social distancing application can also be used to track the absolute location of the mobile device 102 as well as its distance relative to other mobile devices. The functionality of the location tracking application may be provided in the client application 208 that is used for mobile device-assisted facial recognition, in which case the beacon system may be regarded as an example of the indoor positioning system 112 shown in Figure 1.

It will be understood that the invention has been described above purely by way of example, and that modifications of detail can be made within the scope of the claims. In particular, the sequence of operations shown in Figures 5, 6 and 10 is merely exemplary. Any of the operations shown in methods 500, 600 and/or 1000 may be performed in a different order that achieves substantially the same result.

## Claims

1. A computer-implemented method of facial recognition, the method comprising:
determining a location of a mobile device;
estimating a position of the mobile device within an image based on the location of the mobile device;
identifying a region of the image that includes both the estimated position of the mobile device and a face; and
performing facial recognition within the identified region only.

2. A method in accordance with claim 1, wherein determining the location of the mobile device comprises:
receiving coordinates of the mobile device from an indoor positioning system and/or the mobile device.

3. A method in accordance with claim 1 or claim 2, wherein estimating the position of the mobile device within the image comprises:
projecting the location of the mobile device to a point on an image sensor of a camera that captured the image, based on the location of the mobile device and a known location of the camera.

4. A method in accordance with any of the preceding claims, wherein identifying the region of the image comprises:
processing the image with an edge detection algorithm to identify a plurality of edges in the image; and
combining the plurality of edges to form one or more continuous lines that surround the estimated position of the mobile device, wherein each continuous line defines a respective candidate region of the image.

5. A method in accordance with any of the preceding claims, wherein identifying the region of the image comprises:
processing the image with a foreground detection algorithm to identify one or more foreground regions of the image; and
selecting at least one foreground region that includes the estimated position of the mobile device as a candidate region of the image.

6. A method in accordance with claim 4 or claim 5, wherein identifying the region of the image further comprises:
performing a face detection algorithm within each candidate region to identify a candidate region that includes a single face.

7. A method in accordance with any of the preceding claims, further comprising:
obtaining an identifier of a specific registered user of a facial recognition system;
using the identifier to retrieve facial data for the specific registered user; and
wherein performing facial recognition comprises comparing facial data extracted from the image with the retrieved facial data.

8. A method in accordance with any of the preceding claims, further comprising:
obtaining a decryption key of a specific registered user of a facial recognition system;
decrypting encrypted facial data for the specific registered user using the decryption key; and
wherein performing facial recognition comprises comparing facial data extracted from the image with the decrypted facial data.

9. A method in accordance with claim 8, wherein obtaining the decryption key comprises:
receiving the decryption key from the mobile device.

10. A method in accordance with any of the preceding claims, further comprising:
receiving an authorisation message from the mobile device,
wherein facial recognition is performed only when the authorisation message has been received.

11. A method in accordance with claim 10, wherein the authorisation message comprises:
information relating to the location of the mobile device; and/or
an identifier of a specific registered user of a facial recognition system; and/or
a decryption key for decrypting encrypted facial data for the specific registered user of the facial recognition system; and/or
a password for retrieving facial data for the specific registered user of the facial recognition system.

12. A method in accordance with claim 10 or claim 11, further comprising:
transmitting a beacon signal, the beacon signal being configured to cause the mobile device to transmit the authorisation message.

13. A method in accordance with any of the preceding claims, further comprising:
transmitting a beacon signal, the beacon signal being configured to cause the mobile device to transmit information relating to its location and/or an authorisation message, wherein transmitting the beacon signal comprises:
setting a field of the beacon signal to a first predetermined value;
transmitting the beacon signal, with the field having the first predetermined value, for a first time period;
setting the field of the beacon signal to a second predetermined value; and
transmitting the beacon signal with the field having the second predetermined value for a second time period.

14. A computer-readable medium comprising instructions which, when executed by a computer, cause the computer to perform a method in accordance with any of claims 1 to 13.

15. An apparatus configured to perform a method in accordance with any of claims 1 to 13.
